# FASCICULE DE BREVET EUROPEEN

(11) **EP 1 143 377 B1**
(45) Date de publication et mention de la délivrance du brevet: **04.02.2009**
(21) Numéro de dépôt: 00201262.3
(22) Date de dépôt: 06.04.2000
(51) Int. Cl.: G06K 19/07

(54) **Transpondeur actif ayant des moyens permettant de varier la distance maximale de communication**
Aktiver Transponder mit Vorrichtung zur Veränderung der maximalen Kommunikationsdistanz
Active transponder including means to modify the maximum communication distance

(43) Date de publication de la demande: 10.10.2001
(73) Titulaire: EM Microelectronic-Marin SA, 2074 Marin (CH)
(72) Inventeur: Degrauwe, Marc, 2025 Chez-le-Bart (CH); Rudin, Jürg, 1794 Salvenach (CH); Roz, Thierry, 2515 Prêles (FR)
(74) Mandataire: Surmely, Gérard

(56) Documents cités:
- DE-A- 4 333 964
- GB-A- 2 321 746
- US-A- 5 444 222
- US-A- 5 648 761
- US-A- 5 945 920
- PATENT ABSTRACTS OF JAPAN vol. 1998, no. 11, 30 septembre 1998 (1998-09-30) & JP 10 154216 A (MATSUSHITA ELECTRIC IND CO LTD), 9 juin 1998 (1998-06-09)

## Description

La présente invention concerne des transpondeurs actifs associés à des systèmes d'identification ou de transaction de diverses natures. Plus particulièrement, la présente invention concerne un transpondeur actif destiné à plusieurs applications différentes ou ayant divers modes de fonctionnement avec des niveaux de sécurité différents.

Contrairement aux transpondeurs passifs qui tirent leur énergie des signaux électromagnétiques reçus, un transpondeur actif possède une source électrique interne assurant une alimentation des circuits électroniques indépendamment du niveau de la tension induite dans l'antenne de ce transpondeur.

Le transpondeur actif peut se présenter sous différentes formes, notamment sous forme de carte, de ticket électronique, et plus généralement d'unité portable. Il est prévu que ce transpondeur puisse fonctionner selon des modes nécessitant des degrés de sécurité différents, en particulier pour diverses applications auxquelles le transpondeur est destiné. La gestion de la sécurité d'une application peut intervenir à divers niveaux, notamment dans le protocole de communication. Dans le cas de la présente invention, il est prévu de gérer en particulier la sécurité d'un mode de fonctionnement ou d'une application sélectionnée en limitant la distance de communication entre un lecteur émettant avec une puissance donnée et le transpondeur.

Le document GB 2 321 746 A décit un transpondeur et la gestion de son alimentation en fonction de différentes transactions qui requièrent des tensions d'alimentations diverses. Le transpondeur s'assure au début d'une opération si la puissance d'alimentation à disposition est suffisante pour qu'elle puisse être effectuée entièrement. La comparaison de la tension d'alimentation à une tension de référence permet de valider ou non l'opération en fonction de la transaction.

La présente invention se propose donc de répondre au problème de sécurité engendré par un transpondeur actif multi-application. Il est notamment prévu d'intégrer dans un même transpondeur des applications du type "identification à l'entrée d'un bâtiment ou d'un moyen de transport" et du type bancaire pour des transactions monétaires nécessitant une haute sécurité. Pour des raisons évidentes, on comprend que la distance de communication maximale entre un transpondeur et un émetteur-récepteur, nommé par la suite un lecteur, constitue un paramètre important.

Un but particulier de la présente invention est de fournir un transpondeur actif destiné à diverses applications nécessitant des degrés de sécurité différents et dont l'agencement soit relativement aisé et peu onéreux, tout en assurant une grande efficacité pour la gestion des divers degrés de sécurité requis.

A cet effet, la présente invention concerne un transpondeur actif selon la revendication 1.

Selon un agencement préféré, les moyens de validation comprennent des moyens de mesure de la tension induite moyenne des signaux entrant et un comparateur permettant de déterminer ou détecter si cette tension induite moyenne est supérieure ou inférieure à une tension de référence définissant une valeur de seuil pour la validation des données comprises dans les signaux entrant.

Selon un premier mode de réalisation qui sera décrit ci-après, la tension de référence est variable et définie par un signal de sécurité. Selon un deuxième mode de réalisation décrit également ci-après, la tension de référence est fixe alors que le gain d'amplification est variable et défini par un signal de sécurité de manière à ce que sa valeur soit relativement faible lorsque l'application sélectionnée ou activée est prévue avec un niveau de sécurité élevé.

Ainsi, selon l'invention, il est possible de varier de manière efficace et importante la distance maximale de communication entre un transpondeur et un lecteur d'une puissance d'émission donnée. En effet, en agissant sur le gain d'amplification et/ou la tension de référence définissant un seuil en-dessous duquel les données reçues ne sont pas validées par le circuit de traitement des données, on dispose d'un moyen efficace ne nécessitant pas un agencement électronique supplémentaire complexe. Ensuite, la variation de la distance maximale de communication ne nécessite pas des moyens de communication autres que ceux prévus pour un transpondeur conventionnel, toute l'information nécessaire à la gestion du niveau ou degré de sécurité étant extraite des signaux électromagnétique fourni par le lecteur dans le cadre de la communication prévue avec le transpondeur.

La présente invention sera décrite plus en détail ci-après à l'aide de la description suivante, faisant référence aux dessins annexés, donnés à titre d'exemples nullement limitatifs, dans lesquels :
- la figure 1 représente schématiquement et de manière générale un transpondeur selon l'invention;
- les figures 2 et 3 représentent respectivement des premier et deuxième modes de réalisation de l'invention;
- la figure 4 montre schématiquement une variante de réalisation d'une partie de l'unité électronique du transpondeur servant à la gestion de la distance maximale de communication; et
- la figure 5 représente schématiquement un troisième mode de réalisation de l'invention.

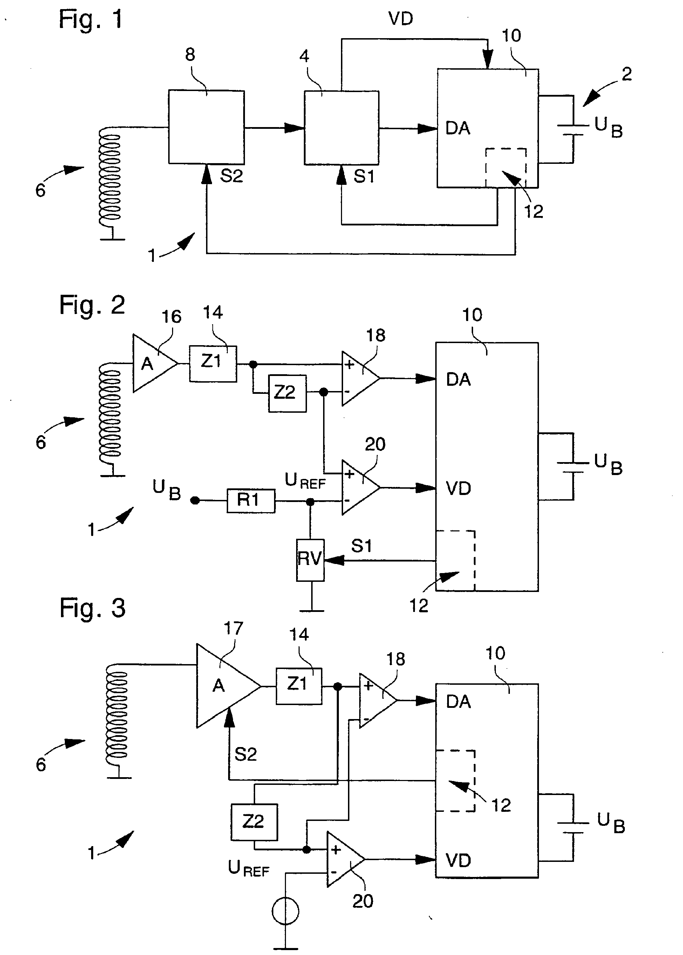

Le transpondeur actif 1 de la figure 1 comprend une batterie 2 fournissant une tension U_{B} pour alimenter l'unité électronique du transpondeur comprenant un module électronique 4 formant des moyens de démodulation des signaux entrant par l'antenne 6 et des moyens de validation des données comprises dans ces signaux. Dans le cas d'une modulation en amplitude, les moyens de démodulation effectuent une détection d'enveloppe du signal reçu. Ils comprennent en particulier un redresseur. L'unité électronique comprend également des moyens d'amplification 8 des signaux entrant et une unité 10 de traitement des données décodées DA. L'unité 10 comprend un circuit 12 de gestion de la distance maximale de communication du transpondeur 1 à un lecteur non représenté.

Le circuit 12 est agencé pour fournir un signal de sécurité S1, S2 respectivement aux moyens de validation des données agencées dans le module d'entrée 4 et/ou aux moyens d'amplification 8 des signaux entrant. Ce signal de sécurité sert à varier la distance de communication maximale en fonction d'une application ou d'un mode de fonctionnement sélectionné(e) ou activé(e) dans le transpondeur 1. La gestion de la distance maximale de communication pour un même transpondeur sera décrite plus précisément ci-après à l'aide des figures 2 à 4.

A la figure 2 est représenté un premier mode de réalisation particulier de l'invention. Les signaux électromagnétiques entrant dans le transpondeur 11 par l'antenne 6 engendrent une tension induite dans celle-ci qui est amplifiée par l'amplificateur 16 à gain fixe. Ces signaux sont porteurs de données codées sous forme digitale notamment par une modulation d'amplitude. On notera toutefois que l'invention s'applique à tout autre type de codage. L'unité de démodulation 14 comporte un filtre symbolisé par Z1 servant à supprimer la composante du signal provenant de la porteuse du signal électromagnétique. La sortie de l'unité 14 est connectée à un comparateur 18 et également à un deuxième filtre Z2.

Le filtre Z2 est un filtre passe-bas servant à fournir à sa sortie un signal en tension correspondant à la tension moyenne du signal démodulé par l'unité 14. Ce signal de tension moyenne est fourni d'une part au comparateur 18 de manière à ce que ce dernier fournisse en sortie un signal digital, notamment binaire, présentant des états hauts et des états bas respectivement positifs et négatifs. La tension moyenne des signaux entrant est également fournie à une première entrée d'un comparateur 20 appartenant aux moyens de validation des données comprises dans les signaux entrant. La seconde entrée du comparateur 20 présente une tension U_{REF}. Ainsi, lorsque la tension moyenne du signal entrant est supérieure à U_{REF}, un signal VD de validation est fourni à l'unité 10 de traitement des données DA. Dans le cas contraire, un signal de non validation de ces données est fourni.

Selon l'invention, il est prévu de varier la tension U_{REF}. Pour ce faire, de manière non limitative, il est prévu une résistance variable RV connectée à la seconde entrée du comparateur 20 et également à une résistance fixe R1 alimentée à tension fixe, en particulier à la tension U_{B} de la batterie 2. La résistance variable RV est commandée par un signal de sécurité S1 fourni par le circuit 12 de gestion de la distance maximale de communication. Selon l'application ou le mode de fonctionnement activé(e) ou sélectionné(e), la tension de référence U_{REF} sera relativement élevée ou basse. Pour augmenter la sécurité, c'est-à-dire diminuer la distance maximale, la tension U_{REF} est mise dans un état haut relativement à la valeur de cette tension pour une application ou un mode de fonctionnement à sécurité réduite, c'est-à-dire permettant une distance de communication relativement élevée.

A la figure 3 est représenté un deuxième mode particulier de réalisation d'un transpondeur 21 selon l'invention. Les références déjà décrites ci-avant ne seront pas à nouveau décrites en détail. Ici, la variation de la distance maximale de communication se fait par une variation du gain de l'amplificateur d'entrée 17. Ce gain est commandé par un signal de sécurité S2 fourni par le circuit 12 de l'unité électronique 10. Le signal reçu, une fois amplifié et démodulé, est fourni d'une part au compararteur 18 et ensuite à l'unité 10 sous forme de bits, et d'autre part au filtre passe-bas Z2 qui fournit à la première entrée du comparateur 20 la tension moyenne du signal amplifié. Selon que cette tension moyenne est supérieure ou inférieure à la tension de référence U_{REF} fixe, le signal VD valide ou ne valide pas les données contenues dans le signal entrant. Pour augmenter la sécurité et donc diminuer la distance maximale de communication, le gain d'amplification est mis à une valeur relativement faible. Ainsi, la tension moyenne du signal amplifié est relativement basse et la validation des données n'intervient que pour des distances limitées entre le transpondeur et un lecteur.

On remarquera que dans le cadre de la présente invention, les moyens de démodulation, les moyens de validation et les moyens d'amplification du signal entrant peuvent intervenir dans un ordre différent selon le mode de réalisation prévu.

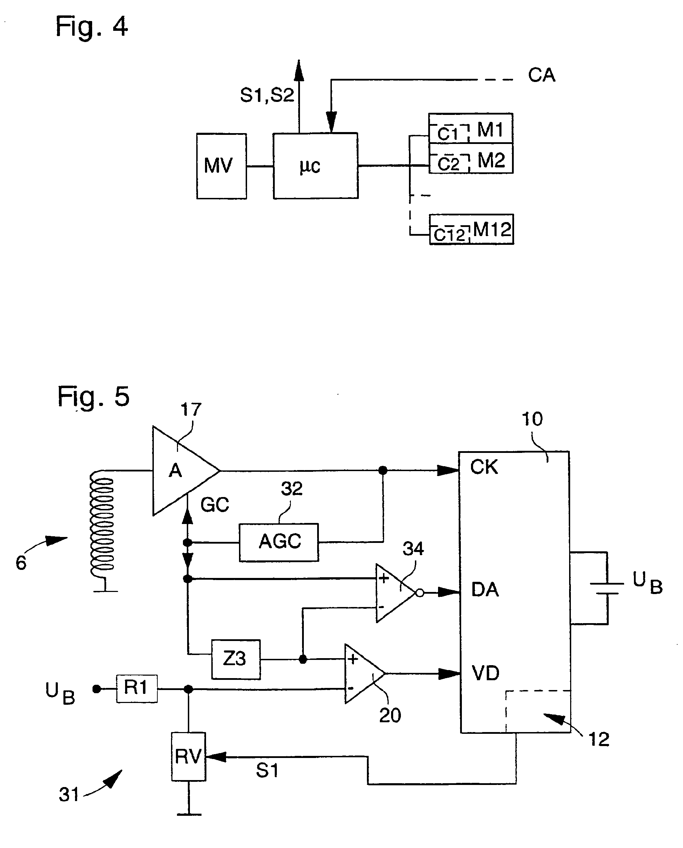

A la figure 4 est représenté schématiquement l'agencement du circuit 12 de gestion de la distance maximale de communication. Selon l'application sélectionnée ou activée, un signal CA est envoyé à un microcontrôleur µc. Ce signal CA est représentatif de cette application. Dans une première variante, le signal CA est fourni directement par l'émetteur-récepteur dans la phase d'identification ou de lancement d'une application donnée. Dans une autre variante, le transpondeur reconnaît l'application ou le mode de fonctionnement sélectionné et envoie lui-même le signal CA. Dans une mémoire programmable ou non sont prévus divers blocs M1, M2, ..., Mn, correspondant aux diverses applications et/ou modes de fonctionnement prévus. Dans chacun de ces blocs est enregistré un code de sécurité C1, C2,...., Cn correspondant aux niveaux de sécurité requis pour les applications et/ou modes de fonctionnement correspondants. Le microcontrôleur µc lit le code de sécurité correspondant à l'application ou au mode de fonctionnement choisi et l'inscrit dans une mémoire vive MV. En réponse au signal CA, le microprocesseur fournit le signal de sécurité S1, S2 pour commander respectivement la valeur de la tension de référence U_{REF} et/ou le gain d'amplification de l'amplificateur 16.

A la figure 5 est représenté schématiquement un troisième mode de réalisation d'un transpondeur 31 selon l'invention. Les références déjà décrites ne seront pas à nouveau décrites ici en détail.

Des signaux électromagnétiques reçus par l'antenne 6 sont amplifiés par l'amplificateur 17 à gain variable dont la sortie est reliée à une unité 32 de commande automatique du gain d'amplification (abréviation AGC). Le gain est contrôlé par l'unité 32 de manière à ce que l'amplitude du signal sortant soit sensiblement constante. Ainsi, le signal sortant de l'amplificateur permet de définir un signal d'horloge CK fourni à l'unité électronique 10. Le signal de contrôle du gain GC présente un profil sensiblement inverse à l'amplitude de l'enveloppe du signal électromagnétique reçu. De ce fait, le circuit 32 forme également un démodulateur des signaux entrant modulés en amplitude avec inversion entre les états hauts et bas. Il est donc possible d'exploiter ce signal GC pour fournir les données digitales DA à l'unité 10 en inversant ce signal à l'aide d'un comparateur-inverseur 34. La tension moyenne du signal GC est obtenue à l'aide du filtre passe-bas Z3. Cette tension moyenne est fournie au comparateur-inverseur 34 et au comparateur 20 pour former le signal de validation VD. La gestion de la distance maximale de communication est effectuée de manière similaire au premier mode de réalisation décrit ci-avant à l'aide de la figure 2.

D'autres variantes et modes de réalisation peuvent être conçus par l'homme du métier sur la base de l'enseignement contenu dans la présente description de l'invention.

## Revendications

1. Transpondeur actif (1, 11, 21, 31) comprenant une unité électronique agencée de manière à gérer plusieurs applications ou modes de fonctionnement, une antenne (6) et une source d'alimentation électrique (2) notamment une pile, ladite unité électronique comprenant des moyens d'amplification (8, 16, 17) de signaux porteur de données codées reçus par ladite antenne, des moyens de validation de ces signaux entrant en fonction de leurs tensions moyennes induites dans ladite antenne, et une unité de traitement de données (10), lesdits moyens de validation fournissant à ladite unité de traitement de données un signal de validation des données contenues dans un signal entrant lorsque sa tension induite moyenne en amont de cette unité est supérieure ou égale à une tension de référence déterminée, **caractérisé en ce qu'**il comprend des moyens (12, RV; 12, 17) pour varier la distance de communication maximale à un lecteur ou émetteur-récepteur en fonction de l'application sélectionnée parmi lesdites applications et/ou du mode de fonctionnement sélectionné parmi lesdits modes de fonctionnement, ces moyens étant agencés pour varier le gain d'amplification desdits moyens d'amplification et/ou ladite tension de référence desdits moyens de validation.

2. Transpondeur selon la revendication 1, **caractérisé en ce que** lesdits moyens de validation comprennent un comparateur (20) dont une première entrée est reliée à des moyens (Z2; Z3) fournissant la tension induite moyenne du signal entrant, avant ou après lesdits moyens d'amplification de ce signal entrant, et dont la seconde entrée est reliée à des moyens fournissant ladite tension de référence (U_{REF}).

3. Transpondeur selon la revendication 2, **caractérisé en ce que** ladite tension de référence est variable et définie par un signal de sécurité (S1) de manière à ce que sa valeur soit relativement élevée lorsque l'application ou le mode de fonctionnement sélectionné(e) est prévu(e) avec un niveau de sécurité élevé.

4. Transpondeur selon la revendication 2, **caractérisé en ce que** ladite tension de référence est fixe, ledit gain d'amplification étant variable et défini par un signal de sécurité (S2) de manière à ce que sa valeur soit relativement faible lorsque l'application ou le mode de fonctionnement sélectionné(e) est prévu(e) avec un niveau de sécurité élevé.

5. Transpondeur selon la revendication 3 ou 4, **caractérisé en ce que** lesdits moyens pour varier la distance de communication maximale comprennent une mémoire dans laquelle est stockée un code de sécurité (C1, C2,..., Cn) pour chacune des applications et/ou pour chaque mode de fonctionnement pouvant être sélectionné(e) dans le transpondeur, ces codes de sécurité servant à engendrer ledit signal de sécurité (S1, S2).

## Claims

1. Active transponder (1, 11, 21, 31) including an electronic unit arranged so as to control several applications or operating modes, an antenna (6) and an electric power supply (2) in particular a battery, said electronic unit including means (8, 16,17) for amplifying signals containing coded data received by said antenna, means for validating these incoming signals as a function of their mean induced voltages in said antenna, and a data processing unit (10) said validating means supplying to said data processing unit a validating signal for the data contained in an incoming signal when its mean induced voltage on the input side of this unit is greater than or equal to a determined reference voltage, **characterised in that** it includes means (12, RV; 12, 17) for varying the maximum communication distance to a reader or transceiver as a function of the application selected among said applications and/or the operating mode selected among said operating modes, these means being arranged to vary the amplification gain of said amplification means and/or said reference voltage of said validating means.

2. Transponder according to claim 1, **characterised in that** said validating means include a comparator (20) a first input of which is connected to means (Z2; Z3) supplying the mean induced voltage of the incoming signal, before or after said incoming signal amplifying means, and of which the second input is connected to means supplying said reference voltage (U_{REF}).

3. Transponder according to claim 2, **characterised in that** said reference voltage is variable and defined by a security signal (S1) so that its value is relatively high when the selected application or operating mode is provided with a high level of security.

4. Transponder according to claim 2, **characterised in that** said reference voltage is fixed, said amplification gain being variable and defined by a security signal (S2) so that its value is relatively low when the selected application or operating mode is provided with a high level of security.

5. Transponder according to claim 3 or 4, **characterised in that** said means for varying the maximum communication distance include a memory in which a security code (C1, C2, ....Cn) is stored for each of the applications and/or for each operating mode able to selected in the transponder, these security codes being used to generate said security signal (S1, S2).

## Patentansprüche

1. Aktiver Transponder (1, 11, 21, 31) mit einer elektronischen Einheit, die so angeordnet ist, dass sie mehrere Anwendungen oder Betriebsmodi leitet, sowie mit einer Antenne (6) und einer Stromversorgungsquelle (2), insbesondere einer Batterie, wobei die elektronische Einheit Mittel (8, 16, 17) zum Verstärken von Signalen mit codierten Daten, die von der Antenne empfangen werden, Mittel zum Validieren dieser Eingangsignale in Abhängigkeit von ihren in der Antenne induzierten Mittelspannungen und eine Datenverarbeitungseinheit (10) aufweist, wobei die Validierungsmittel an die Datenverarbeitungseinheit ein Signal zum Validieren der in einem Eingangssignal enthaltenen Daten liefern, wenn dessen induzierte Mittelspannung vor dieser Einheit höher oder gleich einer bestimmten Bezugsspannung ist, **dadurch gekennzeichnet, dass** er Mittel (12, RV; 12, 17) aufweist, um die maximale Kommunikationsdistanz zu einem Leser oder Sender/Empfänger in Abhängigkeit von der aus den genannten Anwendungen ausgewählten Anwendung und/oder von dem aus den genannten Betriebsmodi ausgewählten Betriebsmodus zu variieren, wobei diese Mittel dazu vorgesehen sind, die Verstärkungsleistung dieser Verstärkungsmittel und/oder die Bezugsspannung der Validierungsmittel zu variieren.

2. Transponder nach Anspruch 1, **dadurch gekennzeichnet, dass** die Validierungsmittel einen Komparator (20) enthalten, von dem ein erster Eingang mit Mitteln (Z2; Z3) verbunden ist, welche die induzierte Mittelspannung des Eingangssignals vor oder nach den Mitteln zum Verstärken dieses Eingangssignals bereitstellen, und von dem der zweite Eingang mit Mitteln verbunden ist, welche die Bezugsspannung (U_{REF}) bereitstellen.

3. Transponder nach Anspruch 2, **dadurch gekennzeichnet, dass** die Bezugsspannung variabel ist und von einem Sicherheitssignal (S1) so bestimmt wird, dass deren Wert relativ hoch ist, wenn die ausgewählte Anwendung bzw. der ausgewählte Betriebsmodus mit einem hohen Sicherheitsniveau vorgesehen ist.

4. Transponder nach Anspruch 2, **dadurch gekennzeichnet, dass** die Bezugsspannung fest ist, wobei die Verstärkungsleistung variabel ist und von einem Sicherheitssignal (S2) so bestimmt wird, dass deren Wert relativ niedrig ist, wenn die ausgewählte Anwendung bzw. der ausgewählte Betriebsmodus mit einem niedrigen Sicherheitsniveau vorgesehen ist.

5. Transponder nach Anspruch 3 oder 4, **dadurch gekennzeichnet, dass** die Mittel zum Variieren der maximalen Kommunikationsdistanz einen Speicher enthalten, in welchem ein Sicherheitscode (C1, C2, ..., Cn) für jede der Anwendungen und/oder für jeden Betriebsmodus abgelegt ist, die bzw. der in dem Transponder ausgewählt sein kann, wobei diese Sicherheitscodes dazu dienen, das Sicherheitssignal (S1, S2) zu erzeugen.
